# FASCICULE DE BREVET EUROPEEN

(11) **EP 1 853 116 B1**
(45) Date de publication et mention de la délivrance du brevet: **07.11.2018**
(21) Numéro de dépôt: 06709511.7
(22) Date de dépôt: 14.02.2006
(51) Int. Cl.: A21B 1/48, A21B 3/15, B65G 15/48, B65G 15/54

(54) **FOUR DE BOULANGERIE COMPORTANT UN TAPIS DE SOLE EN MAILLE TISSÉE**
BÄCKEREIOFEN MIT EINEM GEWEBE-FÖRDERBAND
BAKERY OVEN COMPRISING A WOVEN MESH BELT

(30) Priorité: 15.02.2005 FR 0550431; 14.04.2005 FR 0550956
(43) Date de publication de la demande: 14.11.2007
(73) Titulaire: MECATHERM, Société Anonyme, 67130 Barembach (FR)
(72) Inventeur: ZORN, Bernard, F-67700 Saverne (FR)
(74) Mandataire: Rhein, Alain
(86) Numéro de dépôt international: PCT/FR2006/050132
(87) Numéro de publication internationale: WO 2006/087492

(56) Documents cités:
- EP-A- 0 934 699
- EP-A- 0 943 275
- EP-A- 1 298 398
- DE-C- 934 161
- FR-A- 1 138 193
- FR-A- 2 505 142
- GB-A- 1 385 993
- JP-A- 2000 119 930
- NL-C- 122 166
- US-A- 5 088 391
- US-A- 5 158 171

## Description

L'invention concerne un four de boulangerie.

Il est destiné à être utilisée pour la cuisson de produits de boulangerie, viennoiserie, pâtisserie ou analogue, dans une installation comportant au moins une enceinte de cuisson.

Lesdits produits reposent sur une sole, mobile ou fixe, en cours de cuisson, soit directement, soit au travers d'un support de cuisson adapté, tel qu'une plaque, un filet ou un moule de cuisson, ou analogue.

Des moyens de chauffage de sole peuvent être ménagés sous ladite sole.

On connaît d'ores et déjà des dispositifs de cuisson répondant à la description ci-dessus dont le fonctionnement est discontinu ou continu. Dans le premier cas, le four est capable de contenir une certaine quantité de produits dénommée charge. Elle en est extraite en fin de cuisson, laissant place à la cuisson d'une nouvelle charge. Dans le cas d'un four de cuisson continue, les produits sont acheminés au travers de l'enceinte de cuisson par des moyens d'acheminement appropriés entre une entrée et une sortie, le temps de transit correspondant au temps de cuisson.

Pour l'enfournement et l'évacuation d'une charge de produits dans des fours à fonctionnement discontinu ou encore pour le transit de ces produits au travers de fours à fonctionnement continu, la sole de l'enceinte de cuisson, sur laquelle reposent lesdits produits, soit directement, soit au travers d'un support de cuisson adapté, tel qu'une plaque, un filet ou un moule de cuisson, peut être conçue mobile, par exemple sous forme d'un plateau coulissant, notamment dans le cas d'une sole dite sortante, ou d'un tapis de cuisson approprié. Ce tapis peut être de type métallique ou en matériau synthétique ou encore à lames articulées en pierre ou en métal.

Les fours plus particulièrement visés par la présente invention sont ceux où les produits à cuire sont en contact direct ou par leur support de cuisson avec la sole de l'enceinte de cuisson, sole soumise à des moyens de chauffage adaptés.

En particulier, sous cette sole, peuvent être implantés des résistances chauffantes, des conduits de fluide chauffant ou tout autre moyen de production de chaleur.

Dans la suite de la description, ces moyens de chauffage, s'étendant au moins partiellement sous la sole, seront dénommés « plaque chauffante de sole ».

Ainsi, les produits sont cuits en partie par conduction au travers de cette sole, sachant qu'ils subissent par ailleurs une cuisson par chauffage rayonnant et/ou par convection.

Le rayonnement résulte de la dispersion de la chaleur à partir de la sole et de la voûte de l'enceinte de cuisson chargées en chaleur. A ce propos, la voûte est elle aussi apte à être équipée de moyens de chauffage.

Ces produits peuvent aussi être cuits par convection par un fluide caloporteur mis en mouvement dans l'enceinte de cuisson. Certains fours mettent en application chacun de ces modes de chauffage (conduction, rayonnement, convection) pour assurer la cuisson des produits. En particulier, cela consiste, dans un four comme décrit précédemment comprenant une sole et une voûte pouvant être chauffées, à soumettre l'air de l'enceinte de cuisson à des moyens de brassage adaptés.

Lorsque les produits sont placés directement sur la sole, les calories sont directement absorbées par les produits dans la zone de contact de sorte que, localement, la sole doit se recharger en énergie calorifique par l'intermédiaire de la plaque chauffante de sole pour que se poursuive l'opération de cuisson. Un réchauffement de la sole par simple rayonnement au travers de ladite plaque chauffante de sole présente une certaine inertie ce qui a pour conséquence le ralentissement de l'opération de cuisson par conduction et par rayonnement au travers de la sole. Le phénomène est accentué lorsque les produits reposent sur cette sole au travers de supports de cuisson qui, bien qu'étant généralement ajourés, créent une barrière au chauffage par rayonnement et augmentent l'inertie du transfert des calories par conduction de la sole vers les produits.

Le résultat est une cuisson qui ne s'opère pas dans des conditions identiques sur le dessus et les flancs des produits par rapport au dessous de ces derniers, en contact direct ou indirect avec la sole.

Le mode de transfert d'énergie présente une extrême importance pour le bon déroulement du processus de cuisson, dans lequel la séquence de communication d'énergie calorifique répond à des règles strictes, en vue d'obtenir des produits de bonne qualité gustative et présentant un bon aspect, en particulier au niveau de la croûte.

L'inertie calorifique des moyens de transport et de cuisson doit être adaptée à ce processus.

On connaît des tapis de convoyage pour fours, constitués de maillons métalliques, cottes de mailles, maillons de chaîne, chevrons articulés, maillons plats articulés et analogues. Ces tapis sont lourds, de 15 à 30 kg/m². Ils présentent de ce fait une grande inertie thermique.

A ce propos, il est connu par le document EP-0.934.699 un dispositif de cuisson comportant une telle chaîne sous forme de chevrons articulés.

Quand on dépose un produit sur de tels tapis métalliques lourds et très chauds, le transfert de l'énergie est quasiment instantané. Il y a donc formation immédiate de croûte, conjuguée à un marquage du produit, tel qu'un marquage au fer rouge, imprimant le relief grossier de la structure du tapis dans le produit. Ce phénomène est appelé le ferrage du pain et est assimilable à une brûlure locale.

Quant à l'inverse, on pose un produit sur un tel tapis métallique lourd qui revient froid d'un circuit de retour d'un four tunnel par exemple, le produit, à l'état pâteux, a le temps de s'imprégner dans la structure du tapis dont il épouse le relief avant sa prise sous l'opération de cuisson. Il en résulte le marquage profond du produit au niveau de sa surface inférieur.

On connaît encore des tapis à palettes (de morphologie comparable à des charnières piano), dont le profil présente l'avantage de ne pas marquer le produit. En revanche, ces tapis d'un poids encore plus conséquent ne font qu'accroître les inconvénients précités. En effet, il est impossible de déposer les produits sur des palettes à la température de cuisson de sole optimale. Le tapis doit donc être amené très vite en température après dépose des produits, ceci à l'aide de moyens de chauffe de puissance élevée pour compenser l'inertie. Il s'en suit des réglages de température qui ne permettent pas d'obtenir des résultats de cuisson optimaux.

On connaît enfin des tapis comportant des soles de pierre, qui sont généralement chauffées au niveau du circuit de retour de ce tapis. Ces soles assurent de bonnes conditions de cuisson, puisque l'usage de la pierre évite l'inconvénient du ferrage, donc d'un transfert de chaleur instantané comme dans le cas d'un support métallique, et permet le respect des bonnes conditions de cuisson. En revanche, de tels tapis, d'un poids considérable, se caractérisent encore par un encombrement très important, et de gros diamètres de rouleaux de renvoi, de l'ordre de 600 à 800 mm.

Ces gros diamètres, tout comme ceux pour tapis métalliques (couramment de l'ordre de 300 mm) rendent malaisées les opérations de transfert et de dépose de produits au sabre.

Les systèmes lourds qui ne peuvent fonctionner séquentiellement nécessitent des dispositifs d'enfournement sophistiqués. Cette technique ne permet pas la superposition de plusieurs étages au niveau du four.

Du fait de leur inertie, ces systèmes lourds sont également mal adaptés aux changements de production. En effet, les produits distincts peuvent requérir des températures et conditions de cuisson très différentes. Ainsi, l'inertie thermique de la sole d'un four se traduit par des temps de réchauffement ou encore de refroidissement longs pendant lesquels la production est nécessairement stoppée.

Les tapis lourds présentent encore des inconvénients quant aux contraintes mécaniques qui y sont associées : leur tension est obtenue par un entraînement positif, généralement par le truchement de chaînes d'entraînement dont ils sont pourvus en bordures latérales. La lubrification de telles chaînes est difficile dans des enceintes où la température peut dépasser 300°C. Elle nécessite des lubrifiants très coûteux qui, non seulement, doivent respecter des normes alimentaires strictes, mais, en outre, adaptés à de telles températures, tout en représentant un risque de combustion non négligeable, surtout en phase de fin de cuisson. En effet, le four étant alors vide de produits et donc privé d'une charge vers laquelle évacuer l'énergie, celle-ci est diffusée à la structure même des composants en présence dans la chambre de chauffe, dont la température peut dépasser des seuils acceptables par rapport au lubrifiant utilisé.

Il est par ailleurs connu par le document FR 2505142 des supports de produits de boulangerie constitués d'une structure maillée ayant des dimensions permettant l'aération des produits. De tels supports servent à la manutention des produits, ainsi qu'à certaines phases de traitement (fermentation, cuisson...).

En outre, on connait par le document JP 2000 119930 la fabrication d'un tapis de convoyage, notamment pour des toiles de matériau non tissé ou de matériau de construction, constitué d'un maillage de fils de chaîne et de fils de trame, dont au les fils de chaine sont des câbles constitués de torons composés de plusieurs fils.

Le document FR EP 0 943 275 A décrit un four de boulangerie comportant une sole et au moins une enceinte, ladite sole est définie mobile sous forme d'un tapis de sole évoluant en circuit fermé en venant s'enrouler au moins autour d'un rouleau de renvoi aval et d'un rouleau de renvoi amont.

La présente invention tente de répondre à l'ensemble de ces inconvénients de l'état de la technique en proposant une solution qui permet de pallier au problème d'inertie du rechargement en énergie calorifique d'une sole ou de transfert de calorie en direction des produits pour assurer leur cuisson dans des conditions optimales.

Dans le cadre d'une démarche inventive, il a été imaginé la possibilité de créer une sole légère et à faible inertie thermique.

**Pour ce faire l'invention porte sur un four de boulangerie,** comportant une sole et au moins une enceinte pour la cuisson de produits de boulangerie, viennoiserie, pâtisserie ou analogue, ladite sole est définie mobile sous forme d'un tapis de sole évoluant en circuit fermé en venant s'enrouler au moins autour d'un rouleau de renvoi aval et d'un rouleau de renvoi amont, caractérisé par le fait que la sole comporte une structure en maille tissée en fils et câbles d'acier inoxydable les câbles et/ou les fils étant de section équivalente et ces câbles et/ou ces fils comportant un diamètre inférieur à 0,8 mm, l'espacement entre ces câbles et/ou ces fils est inférieur à quatre fois le diamètre d'un câble et/ou d'un fil le plus faible.

Lesdits produits reposent sur cette sole, mobile ou fixe, en cours de cuisson, soit directement, soit au travers d'un support de cuisson adapté, tel qu'une plaque, un filet ou un moule de cuisson, ou analogue. Des moyens de chauffage de sole sont aménagés sous ladite sole.

De plus, la sole est conçue apte à être chauffée par rayonnement et/ou convection et/ou conduction par des moyens de chauffage de sole.

Selon d'autres caractéristiques de l'invention, la sole est conçue perméable pour un complément de chauffage par convection des produits au travers de ladite sole.

Avantageusement, la sole, sous forme d'un tapis de sole mobile évoluant en circuit fermé en venant s'enrouler autour d'au moins un rouleau de renvoi aval et un rouleau de renvoi amont, est conçu apte à être entraînée par friction.

La résistance à la traction de la sole selon l'invention est donnée par au moins un câble, de préférence un ensemble de câbles, dans le sens de la chaîne correspondant au sens de déroulement de cette sole lorsqu'elle se présente sous forme d'un tapis mobile.

L'invention sera mieux comprise à la lecture de la description détaillée qui va suivre en référence aux figures en annexe :
- la figure 1 représente une vue schématisée et en plan d'un mode de réalisation d'une sole d'un four de boulangerie selon l'invention ;
- la figure 2 représente, de manière schématisée, et en coupe, une sole selon l'invention, sous forme d'un tapis de sole décrivant un circuit fermé et soumis à des moyens de mise sous tension avantageux agissant sur un rouleau tendeur ;
- la figure 3 est une représentation similaire à la figure 2, illustrant le tapis de sole dont les moyens de mise sous tension agissent sur un des deux rouleaux de renvoi autour desquels vient s'enrouler partiellement ce tapis.

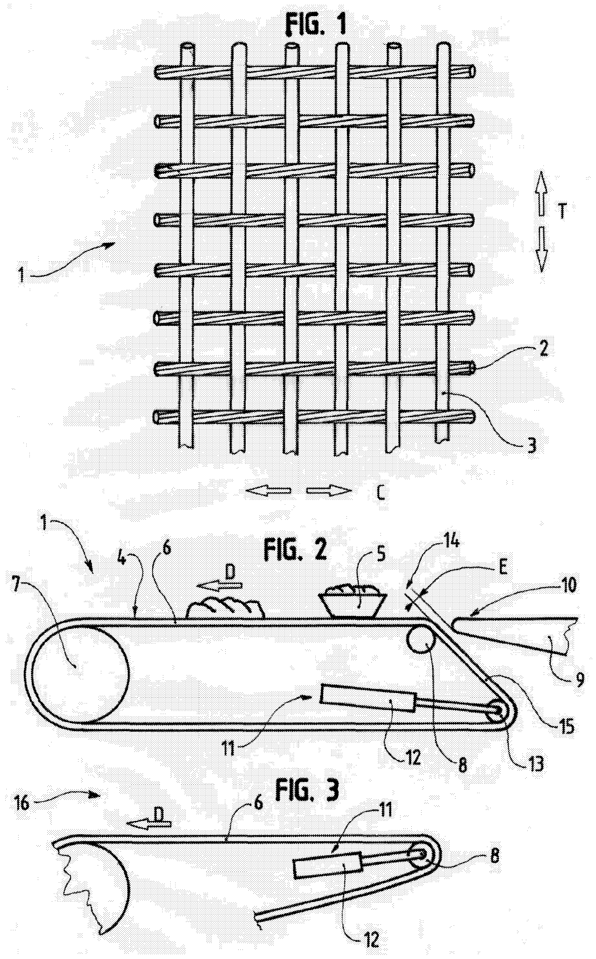

Dans la suite de la description on se réfère aux figures 1 à 3 du dessin en annexe.

L'invention concerne un four de boulangerie (non représenté), comportant une sole (1) et au moins une enceinte pour la cuisson de produits de boulangerie, viennoiserie, pâtisserie ou analogue.

Selon l'invention, cette sole 1 comporte une structure en maille tissée en fils et câbles d'acier inoxydable.

Dans un mode de réalisation préférentiel, cette sole 1 résulte du tressage des câbles 2 dans le sens de la chaîne C, correspondant au sens d'avance des produits dans le cas d'une sole 1 mobile sous forme d'un tapis de sole défilant, et des fils 3 dans le sens de la trame T.

Ces câbles 2 et fils 3 sont réalisés préférentiellement en acier inoxydable. L'invention n'est nullement limitée à ce choix de matière et peut être étendue à d'autres matériaux aptes à supporter, sans altération de leurs qualités mécaniques, la gamme de température usuelles dans les installations de boulangerie et pâtisserie, notamment les températures maximales de cuisson qui peuvent être supérieures à 300°C.

Le procédé de mise en oeuvre pour réaliser une structure de mailles d'apparence tissée peut être du tissage, du tressage, du tricotage, ou analogue.

La structure de cette sole 1 est essentiellement conçue pour minimiser son inertie thermique. Elle fait donc appel à des câbles 2 et des fils 3 de section faible, de façon à obtenir un poids et, ainsi, une inertie thermique très inférieure aux anciens tapis lourds.

Dans un exemple particulier de réalisation, la sole 1, selon l'invention, incorpore des câbles 2 et/ou des fils 3 de section équivalente et de diamètre faible, notamment inférieur à 0,8 mm, et l'espace entre ces câbles 2 et/ou entre ces fils 3, dans la direction de la chaîne C, respectivement de la trame T, est du même ordre de grandeur que le diamètre de ces fils 3 ou câbles 2 eux-mêmes, notamment sans que l'espacement le plus large entre deux câbles 2 ou fils 3 consécutifs soit supérieur à quatre fois le diamètre d'un câble 2 et/ou d'un fil 3 le plus faible.

La nappe ainsi obtenue permet d'obtenir une sole 1 d'une masse inférieure à 5 kg au m², préférentiellement comprise entre 2 à 3 kg au m², donc d'une inertie thermique particulièrement faible.

Selon une particularité de l'invention, la sole 1 est perméable pour permettre un complément de chauffage par convection des produits qui y reposent directement sur la face supérieure 4 ou au travers de supports de cuisson 5 adaptés.

L'inertie thermique d'une sole 1 comportant une telle structure est particulièrement basse.

Ainsi, il est désormais possible, faute d'inertie notable dans cette structure selon l'invention, d'éviter l'inconvénient du ferrage, propre aux tapis lourds métalliques. En particulier, cela permet, dès l'entrée dans le four, une maîtrise parfaite des gradients de température en surface et à coeur des produits, dans le strict respect des conditions optimales de cuisson.

La structure du maillage de la sole étant très serrée et similaire à une toile, la surface en est lisse et régulière d'aspect. Aussi, le produit ne subit pas de marquage avant que sa résistance superficielle devienne suffisante, ce qui survient rapidement dans la mesure où la cuisson, sans ferrage, peut démarrer dès la dépose des produits sur cette sole, conformément au respect des cycles optimaux de gradients et de maintien en température.

On observera que cette conception de la sole, si elle permet son chauffage par rayonnement, elle autorise encore son chauffage par convection de fluide caloporteur mis en circulation fermée en dessous, entre une bouche d'aspiration, à une extrémité de cette sole, et une bouche de refoulement, à une extrémité opposée. Tout particulièrement, sa structure finement tissée ou tressée contribue à la canalisation de ce fluide caloporteur entre la sole et lesdits moyens de chauffage, encore appelés plaque chauffante de sole.

Par ailleurs, en raison de la perméabilité de la sole 1, le fluide de chauffage par convection, en circulation dans la zone située sous la sole 1, peut lécher les produits reposant directement sur cette dernière ou au travers de supports de cuisson 5, sans pour autant modifier les conditions de cuisson des produits sur leur dessus.

La présente invention trouve un intérêt tout particulier dans les dispositifs de cuisson à sole mobile, en particulier ceux dit à cuisson continue de type four tunnel. Dans ce cas, la sole 1 se présente sous forme d'un tapis, dit tapis de sole.

La suite de la description s'attachera plus particulièrement à de tels dispositifs à tapis de sole 6 venant évoluer en circuit fermé comme illustré dans les figures 2 et 3.

La constitution d'un tel tapis de sole 6 sous forme d'un maillage comme décrit précédemment, présente l'avantage de rendre ce tapis apte à son enroulement autour de rouleaux de renvoi 7, 8 de faible diamètre, de l'ordre de 100 à 200 mm.

Une telle disposition est favorable pour la dépose des produits sur ce tapis de sole 6 ou leur transfert sur une autre station de travail en aval de la ligne de panification. Ainsi, les produits sont usuellement déposés sur un tel tapis au moyen d'un outil que l'on dénomme un sabre 9.

Lorsque l'enroulement du tapis se fait autour d'un rouleau de renvoi de grand diamètre, l'extrémité 10 de ce sabre 9 ne peut se rapprocher au-delà d'une distance minimum du tapis s'il se trouve dans le même plan que ce dernier. Pour éviter que les produits, à l'état pâteux, ne tombe entre le tapis et ce sabre, il est très fréquent de surélever celui-ci de manière à le positionner légèrement au-dessus du tapis. Cependant, en venant ainsi faire retomber les produits sur ce tapis, même si ce n'est que d'une faible hauteur, ils peuvent être altérés ou déformés.

L'enroulement sur un rouleau de renvoi 8 de section restreinte, comme cela est possible au travers de la présente invention, permet de minimiser l'écart E entre le tapis de sole 6 et le sabre 9, tout en maintenant celui-ci dans le même plan de transport que défini ce tapis. Cela permet un transfert des produits sans altération, ni marquage.

L'utilisation d'un tapis de sole 6 très fin, selon l'invention, vient à l'encontre d'un préjugé ancien envers de tels tapis estimés trop fragiles.

La structure légère possède néanmoins une résistance mécanique suffisante dans la direction D de déroulement du tapis, grâce à l'agencement des câbles 2 de chaîne C, tel qu'exposé plus haut.

Pour conserver à ce tapis de sole 6 sa légèreté, le système d'entraînement positif par chaînes a été supprimé. On supprime de ce fait tous les inconvénients et risques liés aux contraintes de lubrification de ces dispositifs.

En fait, ce tapis de sole 6 est entraîné par friction au travers de sa mise sous tension entre les deux rouleaux de renvoi 7, 8 situés aux extrémités de sa trajectoire. En général, ces rouleaux de renvoi 7, 8 sont disposés de part et d'autre de l'enceinte de cuisson que doit traverser le tapis 6. A ce propos, ils lui sont associés des moyens de mise sous tension automatique 11 venant compenser avantageusement les phénomènes de dilatation résultant des variations de température.

Ces moyens de mise sous tension automatique 11 sont constitués, préférentiellement, par au moins un vérin 12, agissant sur un des rouleaux de renvoi 8 (voir figure 3) ou sur un rouleau tendeur 13 spécifique autour duquel vient s'enrouler partiellement le tapis de sole 6. De manière particulière, ce rouleau tendeur 13 est situé en avant et sous le rouleau de renvoi 8 disposé à l'extrémité en amont 14 du tapis de sole 6. Ainsi, ce dernier décrit, entre ce rouleau tendeur 13 et ledit rouleau de renvoi amont 8, un plan incliné 15 ascendant s'étendant sous le sabre 9 de dépose des produit.

Cette disposition permet de maîtriser la position latérale du tapis de sole 6 avant même que celui-ci ne vienne s'engager sur le rouleau de renvoi amont 8 et, donc, sur toute sa longueur de transport s'étendant entre ce rouleau de renvoi amont 8 et le rouleau de renvoi aval 7. Tout particulièrement, lesdits moyens de mise sous tension 11 constituent encore de manière avantageuse des moyens de réglage de l'équerrage du rouleau 8, 13 sur lequel ils agissent par rapport à l'alignement du tapis de sole 6. En fait, ces moyens de mise sous tension 11 comporte au moins deux vérins 12 susceptibles d'agir de part et d'autre dudit rouleau de renvoi 8 ou tendeur 13 en vu d'ajuster son équerrage par rapport au tapis 6, ces vérins 12 étant commandés notamment par des moyens de détection 16 de l'état d'alignement du tapis.

De tels moyens de détection 16 peuvent être de type optique et/ou mécanique et conçues pour détecter les débordements latéraux de ce tapis 6 et, ainsi, commander l'un ou l'autre des vérins 12 qui, en agissant sur l'équerrage du rouleau 8, 13, assurent le réalignement convenable de ce tapis 6.

L'invention concerne encore un four constitué d'un ou plusieurs modules, chaque module comprenant une enceinte de cuisson, au moins l'enceinte de cuisson d'un de ces modules comportant une sole mobile, telle que décrite précédemment.

## Revendications

1. Four de boulangerie, comportant une sole (1) et au moins une enceinte pour la cuisson de produits de boulangerie, viennoiserie, pâtisserie ou analogue, ladite sole (1) est définie mobile sous forme d'un tapis de sole (6) évoluant en circuit fermé en venant s'enrouler au moins autour d'un rouleau de renvoi aval (7) et d'un rouleau de renvoi amont (8), **caractérisé par le fait que** la sole (1) comporte une structure en maille tissée en fils (3) et câbles (2) d'acier inoxydable, les câbles (2) et/ou les fils (3) étant de section équivalente et ces câbles (2) et/ou ces fils (3) comportant un diamètre inférieur à 0,8 mm, l'espacement entre ces câbles (2) et/ou ces fils (3) est inférieur à quatre fois le diamètre d'un câble (2) et/ou d'un fil (3) le plus faible.

2. Four de boulangerie selon la revendication 1, **caractérisée par le fait que** ladite sole (1) comporte une masse inférieure à 5 kg/m², de préférence comprise entre 2 et 3 kg/m².

3. Four de boulangerie selon l'une quelconque des revendications précédentes, **caractérisée par le fait que** ladite sole (1) est perméable pour un complément de chauffage par convection des produits reposant sur cette sole (1).

4. Four de boulangerie selon l'une quelconque des revendications précédentes, **caractérisée par le fait que** les câbles (2) s'étendent dans la direction de la chaîne C, correspondant au sens de défilement (D) du tapis de sole (6), les fils (3) s'étendant dans le sens de la trame T.

5. Four de boulangerie selon l'une quelconque des revendications précédentes, **caractérisé par le fait qu'**il comporte des moyens d'entraînement par friction dudit tapis de sole (6).

6. Four de boulangerie selon l'une quelconque des revendications précédentes, **caractérisé par le fait qu'**il comporte des moyens de mise sous tension automatique (11) du tapis de sole (6) constitué par au moins un vérin (12) agissant sur un des rouleaux de renvoi (8) ou un rouleau tendeur (13) autour duquel vient s'enrouler partiellement le tapis de sol (6) .

7. Four de boulangerie selon la revendication 6, **caractérisé par le fait que** le rouleau tendeur (13) est situé en avant et sous le rouleau de renvoi amont (8) amenant le tapis de sole (6) à décrire un plan incliné ascendant (15) entre le rouleau tendeur (13) et le rouleau de renvoi amont (8).

8. Four de boulangerie selon la revendication 6 ou 7, **caractérisé par le fait que** les moyens de mise sous tension (11) constituent des moyens de réglage de l'équerrage du rouleau, selon le cas, de renvoi (8) ou tendeur (13) pour l'ajustement latéral du tapis de sole (6).

9. Four de boulangerie selon la revendication 8, **caractérisé par le fait que** les moyens de mise sous tension (11) comportent au moins deux vérins (12) conçus aptes à agir de part et d'autre dudit rouleau de renvoi (8) ou tendeur (13) en vue d'ajuster son équerrage par rapport au tapis de sole (6).

10. Four de boulangerie selon l'une quelconque des revendications 6 à 9, **caractérisé par le fait que** les moyens de mise sous tension (11) sont commandés par des moyens de détection (16) de l'état d'alignement du tapis de sole (6).

## Patentansprüche

1. Bäckereiofen, umfassend einen Boden (1) und mindestens einen abgeschlossenen Bereich zum Backen von Bäckereiprodukten, feinen Backwaren, Konditoreiwaren und Ähnlichem, wobei der Boden (1) beweglich in Form einer Bodenmatte (6) definiert ist, die sich in einem geschlossenem Kreislauf bewegt, indem sie sich mindestens um eine nachgelagerte Umlenkrolle (7) und eine vorgelagerte Umlenkrolle (8) wickelt, **dadurch gekennzeichnet, dass** der Boden (1) eine Struktur aus Masche, gewoben aus Drähten (3) und Kabeln (2) aus rostfreiem Stahl umfasst, wobei die Kabel (2) und/oder die Drähte (3) einen gleichwertigen Schnitt aufweisen und diese Kabel (2) und/oder diese Drähte (3) einen Durchmesser von weniger als 0,8 mm umfassen, wobei der Abstand zwischen diesen Kabeln (2) und/oder diesen Drähten (3) weniger als vier Mal der Durchmesser eines schwächsten Kabels (2) und/oder Drahts (3) ist

2. Bäckereiofen nach Anspruch 1, **dadurch gekennzeichnet, dass** der Boden (1) eine Masse von weniger als 5 kg/m² umfasst, vorzugsweise im Bereich zwischen 2 und 3 kg/m².

3. Bäckereiofen nach einem beliebigen der vorhergehenden Ansprüche, **dadurch gekennzeichnet, dass** der Boden (1) durchlässig für einen Konvektionsheizungs-Zusatz der Produkte, die auf diesem Boden (1) stehen, ist.

4. Bäckereiofen nach einem beliebigen der vorhergehenden Ansprüche, **dadurch gekennzeichnet, dass** sich die Kabel (2) in der Richtung der Kette C erstrecken, die der Ausrichtung des Durchlaufs (D) der Bodenmatte (6) entspricht, wobei sich die Drähte (3) in der Ausrichtung des Schusses T erstrecken.

5. Bäckereiofen nach einem beliebigen der vorhergehenden Ansprüche, **dadurch gekennzeichnet, dass** er Mittel zur Bewegung der Bodenmatte (6) durch Reibung umfasst.

6. Bäckereiofen nach einem beliebigen der vorhergehenden Ansprüche, **dadurch gekennzeichnet, dass** er Mittel zur automatischen Spannung (11) der Bodenmatte (6) umfasst, die aus mindestens einer Winde (12) bestehen, die auf eine der Umlenkrollen (8) oder eine Spannrolle (13) wirken, um die sich teilweise die Bodenmatte (6) wickelt.

7. Bäckereiofen nach Anspruch 6, **dadurch gekennzeichnet, dass** sich die Spannrolle (13) vor und unter der vorgelagerten Umlenkrolle (8) befindet, die die Bodenmatte (6) mitnimmt, um eine aufsteigende geneigte Ebene (15) zwischen der Spannrolle (13) und der vorgelagerten Umlenkrolle (8) zu beschreiben.

8. Bäckereiofen nach Anspruch 6 oder 7, **dadurch gekennzeichnet, dass** die Mittel zur Spannung (11) Mittel zur Einstellung der Winkelöffnung der Rolle, gegebenenfalls zur Umlenkung (8) oder zur Spannung (13) für die seitliche Anpassung der Bodenmatte (6), darstellen.

9. Bäckereiofen nach Anspruch 8, **dadurch gekennzeichnet, dass** die Mittel zur Spannung (11) mindestens zwei Winden (12) umfassen, die dazu entworfen sind, geeignet zu sein, auf beiden Seiten der Umlenkrolle (8) oder der Spannrolle (13) zu wirken, um ihre Winkelöffnung mit Bezug auf die Bodenmatte (6) einzustellen.

10. Bäckereiofen nach einem beliebigen der Ansprüche 6 bis 9, **dadurch gekennzeichnet, dass** die Mittel zur Spannung (11) durch Mittel zum Nachweis (16) des Zustands der Ausfluchtung der Bodenmatte (6) gesteuert werden.

## Claims

1. A bakery oven, comprising a hearth (1) and at least one enclosure for baking baked goods, pastries, confectionery goods or the like, said hearth (1) being defined to be movable in the form of a belt (6) traveling in a closed circuit while winding at least around a downstream return roller (7) and an upstream return roller (8), **characterized in that** the hearth (1) comprises a woven mesh structure of wires (3) and cables (2) made of stainless steel, the cables (2) and/or the wires (3) having an equivalent section, and said cables (2) and/or said wires (3) comprising a diameter smaller than 0.8 mm, the spacing between said cables (2) and/or said wires (3) being less than four times the diameter of a smallest cable (2) and/or wire (3).

2. The bakery oven according to claim 1, **characterized in that** said hearth (1) comprises a mass of less than 5 kg/m², preferably comprised between 2 and 3 kg/m².

3. The bakery oven according to any one of the preceding claims, **characterized in that** said hearth (1) is permeable for additional heating by convection of the products resting on said hearth (1).

4. The bakery oven according to any one of the preceding claims, **characterized in that** the cables (2) extend in the direction of the chain C, corresponding to the travel direction (D) of the belt (6), the wires (3) extending in the weft direction T.

5. The bakery oven according to any one of the preceding claims, **characterized in that** it comprises means for driving said belt (6) by friction.

6. The bakery oven according to any one of the preceding claims, **characterized in that** it comprises means (11) for automatically powering on the belt (6) made up of at least one jack (12) acting on one of the return rollers (8) or on a tensioning roller (13) around which the belt (6) winds partially.

7. The bakery oven according to claim 6, **characterized in that** the tensioning roller (13) is located in front of and below the upstream return roller (8) causing the belt (6) to describe an ascending inclined plane (15) between the tensioning roller (13) and the upstream return roller (8).

8. The bakery oven according to claim 6 or 7, **characterized in that** the means (11) for powering on make up means for adjusting the squaring of the return (8) or tensioning (13) roller, depending on the case, for the lateral adjustment of the belt (6).

9. The bakery oven according to claim 8, **characterized in that** the tensioning means (11) comprise at least two jacks (12) designed to be capable of acting on either side of said return (8) or tensioning (13) roller in order to adjust its squaring relative to the belt (6).

10. The bakery oven according to any one of claims 6 to 9, **characterized in that** the means (11) for powering on are controlled by means (16) for detecting the alignment state of the belt (6).
